# EUROPEAN PATENT SPECIFICATION

(11) **EP 1 738 858 B1**
(45) Date of publication and mention of the grant of the patent: **07.01.2009**
(21) Application number: 06253415.1
(22) Date of filing: 29.06.2006
(51) Int. Cl.: B23K 26/26, B23K 26/32, F01D 5/30, B23K 26/06, B23K 101/00

(54) **Shimmed laser beam butt welding process without using a backing for joining superalloys for gas turbine applications**
Zwischenlager Laserstrahlstumpfschweissen ohne Verwendung einer Trägerplatte zum Verbinden von Superlegierungen für Gasturbinen
Procédé de soudage bout à bout par faisceau laser avec un élément intermédiaire et sans utilisation d'un support, pour assembler des superalliages pour des applications dans les turbines à gaz

(30) Priority: 30.06.2005 US 169695
(43) Date of publication of application: 03.01.2007
(73) Proprietor: GENERAL ELECTRIC COMPANY, Schenectady, NY 12345 (US)
(72) Inventor: Nowak, Daniel Anthony, Greenville South Carolina 29607 (US); Feng, Gianjiang, Greenville South Carolina 29615 (US); Spiegel, Lyle B., Niskayuna New York 12309 (US)
(74) Representative: Bedford, Grant Richard

(56) References cited:
- EP-A- 1 179 383
- EP-A1- 0 892 218
- EP-A1- 1 319 462
- WO-A-00/15382
- US-A1- 2004 182 835
- US-B1- 6 872 912

## Description

This invention relates to gas turbine technology generally, and specifically, to a method of layer beam welding at least two adjacent supnalloy components according to the preamble of claim 1 (see, for example EP 1 319 462 A).

Nickel-based superalloys like Rene N5, typically contain greater than 10% refractory elements and are generally viewed as unweldable. The use of a low heat input welding process, however, such as laser or electronic beam, has produced crack-free weld joints over a very narrow range of welding conditions. One drawback to these beam processes is the directional grain growth in the fusion zone which forms a distinct dendritic boundary in the center of the weld zone. This type of grain structure makes the joint vulnerable to centerline cracking and results in very poor fatigue strength. For example, the fatigue life of an electron beam welded N5/GTD-222 joint at 649°C. (1200°F.) and 0.9% strain fails at about 100 cycles, which is five times lower than that of lower strength GTD-222 base metal. Weld property levels in this range can result in catastrophic failure of the weld joint during operation of a gas turbine.

To overcome the centerline cracking problems, several alternative processes have been developed for welding superalloys. Among them, the wire feed electron beam process (wire feed EB), preplaced shim electron beam process (shim EB) and the gas tungsten arc process (TIG) have proven to be the best performers in improving fatigue life of the joint. The wire feed EB process adds ductile superalloy filler metal, through an automatic wire feeder during electron beam welding. Because of the increase ductility of the weld metal, the fatigue life of a wire feed EB joint improved to 1000 cycles at 649°C. (1200°F) and 0.9% strain. However, this process is limited by the joint thickness. Also, lack of penetration (LOP) defects often occur when the joint thickness is increased beyond 2.54 mm (0.1 inch). The sharp LOP defect can knock the fatigue life down to less than 10 cycles. The shim EB process greatly increased the joint thickness, however, an integral backer is required with the weld joint to stop the electron beam. This backer results in a stress riser at the root of the joint.

Another alternative process pursued was TIG welding with ductile superalloy filler metal. This multi-pass arc welding process completely changes the directional grain structure in the weld zone, introduces ductility into the weld metal, and eliminates the integral backer. As a result, the fatigue life of a TIG welded joint increased to 1300 cycles at 649°C. (1200°F.) and 0.9% strain. The high heat input associated with arc welding, however, can cause relatively large airfoil distortions and increase the risk of lack of fusion defects in the weld. Oftentimes, the amount of distortion prohibits the use of the TIG process as the primary welding process for complex airfoil structures.

EP-A1-1 319 462 discloses a method of welding articles formed of single-crystal superalloys, particularly single-crystal nickel-base superalloys containing 10 weight percent or more of refractory metals in which a shim is positioned between the articles, and a backing strip is preferably positioned to contact both articles and bridge the gap between the articles. In EP-A1-0 892 218 a gas turbine multi-hole film-cooled combustor liner is provided in which cooling holes are formed through the liner shell by laser drilling at or near wave crest portions of the wavy configuration of the liner shell. US-B1-6 872 912 discloses a process for crack-free welding a nickel based single crystal superalloy article which comprises: melting an article surface to be welded and a filler alloy with an energy source, preferably a laser, wherein the filler alloy is a composition of a nickel based single crystal superalloy.

According to various aspects, the present invention provides a modified laser beam welding process to facilitate development of a defect-free superalloy weld joint which will improve low cycle fatigue life at high temperature and high strain range. The process is also designed to achieve a full penetration weld up to 12 mm (0.5 inch) deep, eliminate the need for an integral backer, reduce the propensity for lack of penetration defects, and decrease the risk for lack of fusion defects. The process also reduces part distortion and allows fit-up gap variations in the production joints of complex airfoil structures.

More specifically, and in one exemplary embodiment, a 0.25 - 1.01 mm (0.010 - 0.040 inch) thick nickel-based or cobalt-based shim is pre-placed and inserted between coupons of nickel-based, cobalt-based and iron-based superalloys (for example, GTD-222, GTD-111, A286, FSX-414 and Rene N5). The height of the shim extends about 0.25 - 3.8 mm (0.010 inch - 0.150 inch) over that of the joint depth. In other words, the shim projects outwardly 0.25 - 3.8 mm (0.010 - 0.150 inch) above the joint surfaces. The base materials are welded to themselves and to each of the other candidate superalloys, without the use of a backer plate.

Accordingly, the invention relates to a method of laser beam welding at least two adjacent superalloy components according to claim 1.

Various embodiments of the invention will now be described in detail in connection with the drawings identified below, in which:
FIGURE 1 is a schematic diagram of a laser shim welding setup prior to welding; and
FIGURE 2 is a schematic diagram of a finished laser shim weldment.

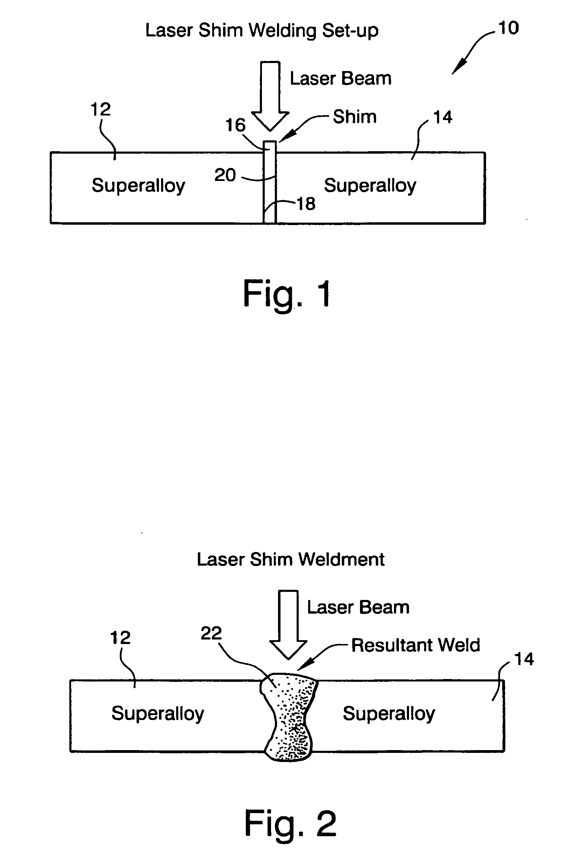

With reference to Figure 1, a laser shim welding setup 10 includes a pair of coupons 12, 14 of a nickel-based superalloy (for example, GTD-222), with a shim 16 inserted between opposed faying surfaces 18, 20 located on either side of the nickel-based or cobalt-based shim 16. In the disclosed example, the shim 16 is between 0.25 to 1.01 mm (0.010 to 0.040 inch) thick, and note that the height of the shim extends about 0.25 - 3.8 mm (0.010 - 0.150 inch) over that of the joint depth, i.e., over the height or thickness of the coupons 12 and 14. The weld joint mock-ups are fit-up with weld joint gaps from 0 to 0.010 inch (between the shim 16 and faying surfaces 18, 20), and tack welded using a lower power setting with a laser beam. Spot tacks are made every 12.7 mm (one half inch) along the length of the joint.

Further according to the invention, the welding parameters used for the laser shim welding process are as follows:
Wattage: 1000-3500 W
Speed: 20 to 76 cmpm (8 to 30 ipm)
Focal Length: 190 mm (7 ½ inches)
Shim Thickness: 0.25 to 1.01 mm (0.010 to 0.040 inch)
Gap: 0 to 0.25 mm (0 to 0.010 inch).

Note that in laser beam welding, the beam itself moves along the weld joint whether it be planar or circular.

Figure 2 illustrates the resultant butt weld 22, after cooling, bonding the superalloy coupons 12 and 14 together with the faying surfaces 18, 20 mixing with the material of the shim 16. Note that even without the backing plate, the weld material projects only slightly below the lower surfaces of the respective coupons 12, 14 and can be machined flush if desired. Similarly, the upper irregular surface of the weld may also be machined flush with the coupons.

It will be appreciated that the above-described laser shim welding process is also suitable for use with cobalt-based and iron-based superalloys, for example, GTD-111, A286, FSX-414, and Rene N5.

The modified laser beam welding process yields full penetration welds of up to 12.7 mm (0.5 inch) deep, eliminates the need for the integral backer plate, reduces the propensity for a lack of penetration defects, and decreases the risk for lack of fusion defects.

While described in terms of components or coupons, it will be appreciated that the welded components may be any of a variety of turbine parts, for example, steam exit chimneys to nozzle joints; bucket to bucket tip caps, etc.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

### Parts List

Laser Shim Welding Setup 10
Pair of Coupons 12, 14
Shim 16
Opposed Faying Surfaces 18, 20
Butt Weld 22

## Claims

1. A method of laser beam welding at least two adjacent superalloy components (12, 14) comprising:
(a) aligning the components along a pair of faying surfaces (18, 20) but without a backing plate;
(b) placing a superalloy shim (16) between the faying surfaces;
(c) welding the components together using a laser beam causing portions of the superalloy components along the faying surfaces to mix with the superalloy shim; and cooling the components to yield a butt weld (22) between the components;
**characterized in that:**
spot tacks are made every 12.7 mm (one half inch) along the length of the joint; and wherein
the parameters for carrying out step (c) include:
Wattage: 1000-3500 W
Speed: 20 to 76 cmpm (8 to 30 ipm)
Focal Length: 190 mm (7 ½ inches)
Shim Thickness: 0.25 to 1.01 mm (0.010 to 0.040 inch)
Gap: 0 to 0.25 mm (0 to 0.010 inch) between shim and faying surfaces so that this layer process yields full penetration welds of up to 12.7 mm (0.5 inch).

2. The method of claim 1 wherein the superalloy components (12, 14) are nickel-based, cobalt-based or iron-based superalloys.

3. The method of claim 1 or claim 2 wherein said shim (16) is a nickel-based or cobalt-based superalloy.

4. The method of any preceding claim wherein the shim (16) projects above the adjacent components.

5. The method of claim 4 wherein the shim (16) projects about 0.25 to 3.8 mm (0.010 to 0.150 inch) above the adjacent components.

## Patentansprüche

1. Verfahren zum Laserstrahlschweißen von zumindest zwei benachbarten Superlegierungskomponenten (12, 14), aufweisend:
(a) Ausrichten der Komponenten entlang eines Paares von Stoßflächen (18, 20), aber ohne eine Aufspannplatte,
(b) Platzieren eines Superlegierungsausgleichsstückes (16) zwischen die Stoßflächen,
(c) Zusammenschweißen der Komponenten unter Verwendung eines Laserstrahls, wobei Teile der Superlegierungskomponenten entlang der Stossflächen dazu veranlasst werden, sich mit dem Superlegierungsausgleichsstück zu vermischen, und Abkühlen der Komponenten, um eine Stoßnaht (22) zwischen den Komponenten zu ergeben,
**dadurch gekennzeichnet, dass:**
Heftpunkte alle 12,7 mm (einen halben Inch) entlang der Länge der Verbindung gemacht werden, und wobei
die Parameter zum Ausführen von Schritt (c) beinhalten:
Wattleistung: 1000 bis 3500 W
Geschwindigkeit: 20 bis 76 cmpm (8 bis 30 ipm)
Brennweite: 190 mm (7 1/2 Inch)
Ausgleichsstückdicke: 0,25 bis 1,01 mm (0,010 bis 0,040 Inch)
Lücke: 0 bis 0,25 mm (0 bis 0,010 Inch) zwischen Ausgleichsstück und Stoßflächen, so dass dieses Laserverfahren komplette Durchschweißung von bis zu 12,7 mm (0,5 Inch) ergibt.

2. Verfahren nach Anspruch 1, wobei die Superlegierungskomponenten (12, 14) auf Nickel basierende, auf Kobalt basierende oder auf Eisen basierende Superlegierungen sind.

3. Verfahren nach Anspruch 1 oder Anspruch 2, wobei das Abstandsstück (16) eine auf Nickel basierende oder auf Kobalt basierende Superlegierung ist.

4. Verfahren nach irgendeinem vorhergehenden Anspruch, wobei das Ausgleichsstück (16) über die benachbarten Komponenten übersteht.

5. Verfahren nach Anspruch 4, wobei das Ausgleichsstück (16) etwa 0,25 bis 3,8 mm (0,010 bis 0,150 Inch) über die benachbarten Komponenten übersteht.

## Revendications

1. Procédé de soudage par faisceau laser d'au moins deux composants en superalliage (12, 14) adjacents comprenant :
(a) l'alignement des composants suivant une paire de surfaces affleurantes (18, 20) mais sans plaque d'appui ;
(b) la mise en place d'une cale d'apport en superalliage (16) entre les surfaces affleurantes ;
(c) le soudage des composants ensemble en utilisant un faisceau laser en amenant des parties des composants en superalliage le long des surfaces affleurantes à se mélanger à la cale d'apport en superalliage ; et le refroidissement des composants afin d'obtenir une soudure bout à bout (22) entre les composants ;
**caractérisé en ce que :**
des points de soudure sont réalisés tous les 12,7 mm (un demi pouce) suivant la longueur du joint ; et dans lequel
les paramètres de mise en oeuvre de l'étape (c) comportent :
Puissance : de 1000 à 3500 W
Vitesse : de 20 à 76 cm/mn (8 à 30 pouces/mn)
Distance focale : 190 mm (7,5 pouces)
Epaisseur de cale d'apport : 0,25 à 1,01 mm (0,010 à 0,040 pouce)
Ecartement : de 0 à 0,25 mm (0 à 0,010 pouce) entre la cale et les surfaces affleurantes de telle sorte que ce processus laser conduit à une pénétration totale des soudures allant jusqu'à 12,7 mm (0,5 pouce).

2. Procédé selon la revendication 1, dans lequel les composants en superalliage (12, 14) sont en des superalliages à base de nickel, à base de cobalt ou à base de fer.

3. Procédé selon la revendication 1 ou 2, dans lequel ladite cale d'apport (16) est en un superalliage à base de nickel ou à base de cobalt.

4. Procédé selon l'une quelconque des revendications précédentes, dans lequel la cale d'apport (16) s'étend au-dessus des composants adjacents.

5. Procédé selon la revendication 4, dans lequel la cale d'apport (16) s'étend sur 0,25 à 3,8 mm (0,010 à 0,150 pouce) environ au-dessus des composants adjacents.
